# EUROPEAN PATENT APPLICATION

(11) **EP 4 602 931 A1**
(43) Date of publication of application: **20.08.2025**
(21) Application number: 22962030.7
(22) Date of filing: 12.10.2022
(51) Int. Cl.: A24B 15/12

(54) **ROLLED SHEET, TOBACCO FILLER, SMOKING PRODUCT, AND METHOD FOR PRODUCING ROLLED SHEET**

(71) Applicant: Japan Tobacco Inc., Tokyo 105-6927 (JP)
(72) Inventor: HASHIMOTO, Ayaka, Tokyo 130-8603 (JP); NAGAI, Atsushi, Tokyo 130-8603 (JP)
(74) Representative: Hoffmann Eitle
(86) International application number: PCT/JP2022/038003
(87) International publication number: WO 2024/079810

(57) **Abstract**

The present invention addresses the problem of providing a rolled sheet that can be formed, using a tobacco raw material, without externally attaching a raw material of another poorly-water-soluble substance other than tobacco.

Provided is a rolled sheet that includes (1) a poorly-water-soluble substance derived from a tobacco raw material, and (2) starch extracted from the tobacco raw material or from another tobacco raw material.

## Description

### TECHNICAL FIELD

The present invention relates to a rolled sheet, a tobacco filler, a smoking product, and a method for producing a rolled sheet.

### BACKGROUND ART

Synthetic tobacco, a tobacco material that has been artificially shaped into paper form using leaf tobacco as a raw material, is also called a tobacco sheet. Examples of known methods for producing tobacco sheets include methods in which they are produced via a sheet-forming (paper making) process, methods in which they are produced via a slurry (casting) process, methods in which they are produced via a calendering (rolling) process, and methods in which they are produced via an extrusion moulding process.
Of these tobacco sheets, rolled sheets (laminate sheets) produced by a calendering (rolling) process have the advantage of allowing the tobacco ingredient content to be increased.

In order to obtain a tobacco sheet of a predetermined strength, it is known that the particle size of the raw material tobacco should be within a predetermined range. For example, Patent Document 1 discloses that, the smaller the tobacco particle size, the greater the surface area of the tobacco particles that are bonded together, which allows the strength of the tobacco sheet to be increased, and in particular discloses that ensuring a mesh of 60 to 400 (56 µm to 375 µm) will allow a homogeneous sheet to be created. It is also stated in patent document 2 and patent document 3 that tobacco powder having a particle size of 30 to 120 µm should be used because tobacco web strength is impaired when homogenized to a tobacco particle size of 150 µm or more. There are also techniques in which tobacco having a nano-scaled particle size is used as raw material for sheets (patent documents 4 and 5, and non-patent document 1).

Poorly water-soluble substances such as plant fibers other than tobacco are also often added in order to improve the formability and strength of tobacco sheets. In patent document 6, a cellulose material having a particle size of 200 µm to 4000 µm is added to and mixed with a tobacco raw material having a particle size of 30 µm to 120 µm in a mixing process prior to sheet formation; in mixtures such as this, the substances having two different particle sizes are intertwined, allowing the sheet structure to be stably preserved.

There is also a growing demand for tobacco sheets for use in heated tobacco (heat-not-burn smoking products). A tobacco raw material, an aerosol-generating agent, and a binder, for example, are mixed and formed into a tobacco sheet to produce tobacco sheets for heated tobacco. Ways to produce such tobacco sheets include adding poorly water-soluble cellulose pulp (patent document 7) and specifying the tobacco particle size (patent document 8) in order to improve sheet formability and strength. To produce such tobacco sheets, a poorly water-soluble metal or calcium carbonate is also added to improve thermal conductivity when heated (patent documents 9 and 10).

### CITATION LIST

### PATENT LITERATURE

[PTL 1] EP Patent Application 0565360
[PTL 2] WO 2016/050471 A1
[PTL 3] WO 2017/089589 A1
[PTL 4] US 10196778 B2
[PTL 5] WO 2016/013946 A1
[PTL 6] US 10813381 B2
[PTL 7] US 10321707 B2
[PTL 8] US 10813381 B2
[PTL 9] US 2017/0079325 A1
[PTL 10] JP 4759523 B2

### NON-PATENT LITERATURE

[Non-Patent Document 1] Flexible cellulose nanopaper with high wet tensile strength, high toughness and tunable ultraviolet blocking ability fabricated from tobacco talk via a sustainable method," Qingbo Wang, Haishun Du, Fang Zhang, Yuedong Zhang, Meiyan Wu, Guang Yu, Chao Liu, Bin Li, and Hui Penga Journal of Material Chemistry, 2018, Vol 6 (27), pp. 13021-13030

### SUMMARY OF INVENTION

### TECHNICAL PROBLEM

As disclosed in patent documents 6 and 7, adding a poorly water-soluble substance (such as plant fibers) other than tobacco to the tobacco raw material results in extra costs in the preparation of the poorly water-soluble substance as well as in extra time and labour in the process of blending the poorly water-soluble substance.
As a result of extensive research by the inventors of the present application undertaken in view of the above circumstances, it was discovered that a tobacco sheet, and in particular a rolled sheet, can be formed, regardless of particle size, using a tobacco raw material in the form of a plant, without the external attachment of a poorly water-soluble substance raw material (such as a fiber material) other than tobacco. An object of the present invention is to provide a rolled sheet that can be formed using a tobacco raw material, without the external attachment of a poorly water-soluble substance raw material other than tobacco.

### SOLUTION TO PROBLEM

The above problem is solved by the following invention:
[1] A rolled sheet, comprising: (1) a poorly water-soluble substance derived from a tobacco raw material; and
   (2) starch extracted from said tobacco raw material or from another tobacco raw material
[2] The rolled sheet according to [1], wherein the starch is starch extracted from said tobacco material.
[3] The rolled sheet according to [1] or [2], wherein the starch is soluble starch.
[4] The rolled sheet according to any of [1] to [3], wherein the primary particle size of the poorly water-soluble substance is 50 µm or less.
[5] The rolled sheet according to any of [1] to [4], wherein the starch content in the rolled sheet is 10 wt% or less.
[6] The rolled sheet according to any of [1] to [5], wherein the tobacco raw material from which the poorly water-soluble substance is derived comprises leaf tobacco.
[7] The rolled sheet according to any of [1] to [6], wherein the tobacco raw material from which the poorly water-soluble substance is derived comprises an alkaloid.
[8] The rolled sheet according to any of [1] to [7], further comprising an aerosol-generating agent.
[9] The rolled sheet according to [8], wherein the aerosol-generating agent comprises glycerin, 1,2-propanediol, 1,3-propanediol, or a mixture thereof.
[10] The rolled sheet according to any of [1] to [9], wherein no binder other than the starch is included.
[11] The rolled sheet according to any of [1] to [10], wherein no pulp is included.
[12] Tobacco filler comprising the rolled sheet according to any of [1] to [11].
[13] A smoking product comprising the tobacco filler according to [12].
[14] The smoking product according to [13], which is a heat-not-burn smoking product.
[15] A method for producing the rolled sheet according to any of [1] to [11], comprising:
   the step of heating a tobacco raw material in a medium to extract starch and prepare a tobacco formulation; and the step of rolling and then drying the tobacco formulation.

### ADVANTAGEOUS EFFECTS OF THE INVENTION

The present invention makes it possible to provide a rolled sheet that can be formed using a tobacco raw material, without the external attachment of a poorly water-soluble substance raw material other than tobacco.

### BRIEF DESCRIPTION OF DRAWINGS

[Figure 1] Figure 1 is a cross-sectional schematic view showing an example of a heat-not-burn smoking system.
[Figure 2] Figure 2 is a cross-sectional schematic view showing an example of a heat-not-burn smoking product.

### DESCRIPTION OF EMBODIMENTS

The present invention is described in detail below. As used in the present invention, the range "X-Y"includes X and Y as the end values.

### 1. TOBACCO FORMULATION

The tobacco formulation of the present embodiment comprises:
(1) a poorly water-soluble substance derived from a tobacco raw material;
(2) starch extracted from said tobacco raw material or from another tobacco raw material; and
(3) a medium.

### (1) POORLY WATER-SOLUBLE SUBSTANCE DERIVED FROM A TOBACCO RAW MATERIAL

The poorly water-soluble substance of the present invention is derived from a tobacco raw material. As used in the present application, a poorly water-soluble substance means a substance having a solubility in water of less than 20 µ g/mL at 85°C, which can be obtained in the form of a residue after boiling and extraction of the tobacco raw material. The poorly water-soluble substance can be obtained in the form of a residue of the tobacco raw material by boiling and extracting the tobacco raw material under predetermined conditions, and extracting starch from the tobacco raw material, as shown in Example 1 below (preparation of the tobacco formulation and rolled sheet), for example,
It can be determined whether the poorly water soluble substance is or is not derived from a tobacco raw material by, for example, analyzing the isotope fractions of the poorly water-soluble substance and measuring the 13C/12C ratio.
The poorly water-soluble substance can contain poorly water-soluble fibers or can consist of poorly water soluble fibers.

The shape of the poorly water-soluble substance in the tobacco formulation is not limited but is preferably in granular form.
The lower limit of the primary particle size (D90) of the poorly water-soluble substance is not particularly limited but, in the interests of preserving the sheet structure, is preferably 20 µm or more, more preferably 50 µm or more, and ideally 100 µm or more. The lower limit of the primary particle size (D90) of the poorly water-soluble substance can also be 5 µm or more, or 10 µm or more. The upper limit of the primary particle size (D90) of the poorly water-soluble substance is not particularly limited but, in the interests of sheet structure homogeneity, is preferably 500 µm or less, more preferably 250 µm or less, and ideally 100 µm or less. The upper limit of the primary particle size (D90) of the poorly water-soluble substance can be 80 µm or less, 50 µm or less, or 30 µm or less. Any combination of upper and lower limits of the primary particle size of the above poorly water-soluble substance can be used. The primary particle size (D90) of the poorly water-soluble substance can be determined according to the procedures and conditions described in "(1) Determination of Particle Size of Poorly Water-Soluble Substance" in the [Examples] below.
Reducing the primary particle size of the poorly water-soluble substance can increase the surface area of the tobacco particles that are bonded together and can increase the strength of the rolled sheet.

The lower limit of the content of the poorly water-soluble substance in the tobacco formulation is not particularly limited but, in the interests of ensuring functionality as a substrate, is preferably 5 wt% or more, more preferably 10 wt% or more, and ideally 15 wt% or more, but can also be 20 wt% or more, 75 wt% or more, or 90 wt% or more. The upper limit of the content of the poorly water-soluble substance in the tobacco formulation is not particularly limited but can be 95 wt% or less, 80 wt% or less, 70 wt% or less, 50 wt% or less, or 35 wt% or less. Any combination of upper and lower limits of the content of the poorly water-soluble substance in the tobacco formulation can be used.
The content of the poorly water-soluble substance in the tobacco formulation can be the value calculated on the basis of the solids, minus the medium. The content of the poorly water-soluble substance in the tobacco formulation can be determined according to the procedures and conditions described in "(3) Determination of Content of Poorly Water-Soluble Substance" in the [Examples] below, and can be calculated as a percentage of the weight (wt%) of the resulting dry product relative to the weight of the solids of the tobacco formulation.

The content of the poorly water-soluble substance in the tobacco formulation can also be calculated by the Prosky method. Specifically, samples of the tobacco formulation are obtained, and the starch contained in the samples is randomly broken down by thermostable α-amylase into small amounts of glucose. The peptide bonds of protein included in the samples are then broken down by protease. The sugar chains degraded by the thermostable α-amylase are ultimately broken down by amyloglucosidase into one glucose molecule. Ethanol is then added to the samples to produce precipitate, the precipitate is then recovered via suction filtration, and the resulting precipitate is washed with ethanol and acetone. The precipitate is washed with ethanol and acetone to flush out enzymatically un-degraded lipids in the precipitate. The washed precipitate is dried overnight, and the dry weight is determined. However, the filtered residue obtained via the above suction filtration includes leftover un-degraded sample-derived proteins or enzyme-derived proteins and inorganic matter (ash). The proteins and ash are therefore separately quantified and subtracted from the dry weight to calculate the amount of the poorly water-soluble substance.
The above proteins are calculated by BSA assay, which is based primarily on a two-stage reaction. In the first stage, divalent copper ions (Cu²⁺) contained in the kit are reduced to monovalent copper ions (Cu⁺) by peptide bonds in the protein solution. The amount of Cu²⁺ that is reduced is proportional to the amount of protein contained in the solution. In the second stage, two molecules of bicinchoninic acid (BCA) are coordinated to Cu⁺ to form a bluish-purple complex exhibiting strong absorption at 562 nm. The amount of protein is calculated via colourimetric determination by spectrophotometry of the complex. The ash content is calculated based on the weight of a given amount ashed at a temperature of 550 to 600°C.

### (TOBACCO RAW MATERIAL)

The above tobacco raw material is raw material derived from a tobacco plant, such as tobacco leaf, aged tobacco leaf, cut tobacco, tobacco powder, tobacco raw material parts other than leaves, such as stems and stem waste, and processed or waste products obtained in the course of tobacco raw material processing. Tobacco leaf is a generic term for harvested tobacco leaves before they have been aged. One mode of ageing includes curing. Cut tobacco is aged tobacco leaf, for example, that has been cut to a predetermined size. Tobacco powder is tobacco leaves, for example, that have been ground.

A number of varieties of tobacco can be used as the tobacco raw material. Examples of tobacco varieties include flue cured, Burley, orient, or native varieties, as well as Nicotiana tabacum and Nicotiana rustica varieties. These varieties can also be used alone, but in order to obtain a desired flavor, any varieties over the course from the harvest of tobacco leaves to the processing of the various types in which aged tobacco leaf is used in heat-not-burn tobacco products (specifically, processed tobacco leaves) can also be blended for use. Details on tobacco varieties are disclosed in "Dictionary of Tobacco, Tobacco Academic Studies Center, 2009.3.31."

The tobacco raw material from which the poorly water-soluble substance is derived can include alkaloids in the interests of palatability.
The types of alkaloids are not particularly limited, but nicotine, nornicotine, or mixtures thereof can be used.

### (2) STARCH EXTRACTED FROM THE TOBACCO RAW MATERIAL OR FROM ANOTHER TOBACCO RAW MATERIAL

In this embodiment, starch may be extracted from the tobacco raw material included in the tobacco formulation, or may be extracted from a separate tobacco raw material that is not included in the tobacco formulation. Specifically, the tobacco formulation in one embodiment comprises a tobacco ingredient X and starch extracted from said X, in another embodiment comprises tobacco raw material X and starch extracted from a tobacco raw material Y other than X, and in yet another embodiment comprises the tobacco raw material X, starch extracted from said X, and starch extracted from a tobacco raw material Y other than X.

Starch is present in the cells of the tobacco raw material. The extraction conditions are therefore adjusted to allow the starch to be released from the cells. The extraction conditions are described below.

In the present invention, the starch functions as a binder to join the poorly water-soluble substance together. Tobacco varieties among the above that contain large amounts of starch are therefore preferred. Thus, in one embodiment, the tobacco raw material is preferably tobacco leaf containing 0.1 to 20 wt% starch, and more preferably tobacco leaf containing 1 to 2 wt% starch. Examples of such tobacco leaf include the flue cured or Burley varieties. The tobacco leaf of the former contains about 2 to 5 wt% starch. The tobacco leaf of the latter contains about 0.1 to 0.5 wt% starch.

The use of starch that functions as a binder allows a tobacco formulation that does not contain any binders other than starch to be produced. As used here in the present application, the expression "does not contain" a specific ingredient means that said ingredient is intentionally not added but can be included in the form of impurities. When a binder other than starch is contained in the form of an impurity, the content of the binder other than starch in the tobacco formulation can be 2 wt% or less, 1 wt% or less, or 0.2 wt% or less.

The type of the above starch is not particularly limited, but soluble starch, insoluble starch, or mixtures thereof can be used, among which the use of soluble starch is preferred in the interests of ensuring homogeneous mixing based on water solubility.

The lower limit of the starch content in the tobacco formulation is not particularly limited but is preferably 1 wt% or more, 2 wt% or or more, and ideally 2.5 wt% or more. The upper limit of the starch content in the tobacco formulation is not particularly limited but is preferably 50 wt% or less, more preferably 40 wt% or less, and ideally 25 wt% or less. The upper limit of the starch content in the tobacco formulation can be 20 wt% or less, 15 wt% or less, 10 wt% or less, 5 wt% or less, or 4 wt% or less. Any combination of upper and lower limits of the starch content in the tobacco formulation can be used. A starch content of 1 wt% or more will allow the rolled sheet to be made stronger. As to the upper limit of the starch content (50 wt% or less), 50 wt% starch of a starch that is viscous and functions as a binder will be sufficient, and increasing the amount beyond that will not improve its function as a binder. Ensuring that the starch content in the tobacco formulation is within a numerical range between the above lower and upper limits will result in a suitable amount of starch functioning as a binder and will allow the structure of the resulting rolled sheet to be preserved.
The content of the starch in the tobacco formulation can be the value calculated on the basis of the solids, minus the medium. The content of the starch in the tobacco formulation can be determined according to the procedures and conditions described in "(4) Determination of Starch Content" in the [Examples] below, and can be calculated as a percentage of the weight (wt%) of the starch relative to the weight of the solids of the tobacco formulation.

### (3) MEDIA

The medium is preferably a liquid at room temperature (about 23°C), specific examples of which include water or water-soluble organic solvents. Examples of water-soluble organic solvents include C1-3 linear or branched alcohols, or C4-7 ethers. These can be used alone or in combination as the medium. In the interests of handling, the medium is preferably a mixture of water and a water-soluble organic solvent, and more preferably water.

The content of the medium in the tobacco formulation is not particularly limited, but in the interests of thermal energy efficiency when heated, the content is preferably 20 to 80 wt%, more preferably 30 to 75 wt%, and ideally 50 to 70 wt%. The content of the medium in the tobacco formulation can be calculated based on the dry weight using an IR moisture analyzer.

The tobacco formulation of the present embodiment can be produced, for example, by mixing the tobacco raw material and the medium to obtain a mixture, and then boiling and extracting the mixture to extract starch from the tobacco raw material, as shown in [Example 1] below (Preparation of Tobacco Formulation and Rolled Sheet).
The tobacco formulation may furthermore contain various components such as the aerosol-generating agent and tobacco powder that are noted in the "(Other Components)" section of "2. Rolled Sheet" described below.

The cellulose naturally occurring in the tobacco raw material can be used as a reinforcing material in the present invention. Thus, in one embodiment, the tobacco raw material is preferably tobacco leaf containing 4 to 15 wt% cellulose, and more preferably tobacco leaf containing 5 to 13 wt% cellulose. Examples of varieties include the flue cured or Burley varieties. The leaf tobacco of the former contains about 6 to 8 wt % cellulose. The leaf tobacco of the latter also contains about 10 to 12 wt % cellulose.
The aforementioned poorly water-soluble substance can contain the above cellulose.

### (CHARACTERISTICS OF THE TOBACCO FORMULATION)

As described below, the tobacco formulation of the present embodiment is useful as a tobacco material. When starch is derived from a tobacco raw material, it has a high affinity with the poorly water-soluble substance derived from the same tobacco raw material. In particular, in embodiments comprising the poorly water-soluble substance derived from the tobacco raw material X and the starch extracted from said X, some or all of the starch is removed from the tobacco raw material X to form the poorly water-soluble substance, thus allowing the medium or other components to be retained at sites where the starch in the poorly water-soluble substance has been removed. It is thus believed that there is particularly high affinity between the starch and the poorly water-soluble substance. The poorly water-soluble substance derived from the tobacco raw material thus has high affinity with the starch, for example, or separately added additives, for example. The tobacco formulation of the present embodiment can thus form a stronger rolled sheet, for example.

### 2. ROLLED SHEET

The rolled sheet (laminated sheet) of the present invention comprises:
A rolled sheet, comprising: (1) a poorly water-soluble substance derived from a tobacco raw material; and
(2) starch extracted from said tobacco raw material or from another tobacco raw material.

### (1) POORLY WATER-SOLUBLE SUBSTANCE DERIVED FROM A TOBACCO RAW MATERIAL

The various structural elements, such as the type, configuration, or primary particle size, of the poorly water-soluble substance contained in the rolled sheet are not particularly limited, but can be the same as the various structural elements described in "(1) Poorly Water-Soluble Substance Derived from Tobacco raw material" in "1. Tobacco Formulation" noted above.

The lower limit of the content of the poorly water-soluble substance in the rolled sheet is not particularly limited but, in the interests of ensuring functionality as a substrate, is preferably 5 wt% or more, more preferably 10 wt% or more, and ideally 15 wt% or more, but can also be 20 wt% or more, 75 wt% or more, or 90 wt% or more. The upper limit of the content of the poorly water-soluble substance in the rolled sheet is not particularly limited but can be 95 wt% or less, 80 wt% or less, 70 wt% or less, 50 wt% or less, 45 wt% or less, 40 wt% or less, or 35 wt% or less. Any combination of upper and lower limits of the content of the above poorly water-soluble substance in the rolled sheet can be used.
The rolled sheet can be formed by removing the medium from the tobacco formulation. Therefore, as described in "(3) Determination of Content of Poorly Water-Soluble Substance" in the [Examples] below, the content (wt %) (calculated on the basis of solids) of the poorly water-soluble substance in the tobacco formulation described above can be considered to be equal to the content (wt%) of the poorly water-soluble substance in the rolled sheet.
The content of the poorly water-soluble substance in the rolled sheet can also be calculated based on the aforementioned Prosky method.

The tobacco raw material serving as the poorly water-soluble substance raw material is not particularly limited but can be the same as the tobacco raw material described in "1. Tobacco raw material" noted above.

### (2) STARCH EXTRACTED FROM THE TOBACCO RAW MATERIAL OR FROM ANTHER TOBACCO RAW MATERIAL

The various structural elements, such as the type, of the starch contained in the rolled sheet are not particularly limited, but can be the same as the various structural elements described in "(2) Starch Extracted from the Tobacco Raw Material or from Another Tobacco Raw material" in "1. Tobacco Formulation" noted above.

The lower limit of the starch content in the rolled sheet is not particularly limited but is preferably 1 wt% or more, 2 wt% or or more, and ideally 2.5 wt% or more. The upper limit of the starch content in the rolled sheet is not particularly limited but is preferably 50 wt% or less, more preferably 40 wt% or less, and ideally 25 wt% or less. The upper limit of the starch content in the rolled sheet can also be 20 wt% or less, 15 wt% or less, 10 wt% or less, 5 wt% or less, or 4 wt% or less. Any combination of upper and lower limits of the starch in the rolled sheet can be used. A starch content of 1 wt% or more will allow the rolled sheet to be made stronger. As to the upper limit of the starch content (50 wt% or less), 50 wt% starch of a starch that is viscous and functions as a binder will be sufficient, and increasing the amount beyond that will not improve its function as a binder. Ensuring that the starch content in the rolled sheet is within a numerical range between the above lower and upper limits will result in a suitable amount of starch functioning as a binder and will allow the structure of the resulting rolled sheet to be preserved.
The rolled sheet can be formed by removing the medium from the tobacco formulation. Therefore, as described in "(4) Determination of Starch Content" in the [Examples] below, the starch content (wt %) (calculated on the basis of solids) in the tobacco formulation described above can be considered to be equal to the starch content (wt%) in the rolled sheet.

The rolled sheet can comprise ingredients derived from the tobacco raw material. The ingredients derived from the tobacco raw material can comprise poorly water-soluble substances derived from the above tobacco raw material as well as starch extracted from the above tobacco raw material.
The lower limit of the content of the tobacco raw material-derived ingredients in the rolled sheet is not particularly limited but, in the interests of ensuring functionality as a substrate, is preferably 10 wt% or more, more preferably 15 wt% or more, and ideally 20 wt% or more, but can also be 75 wt% or more, or 90 wt% or more. The upper limit of the content of the tobacco raw material-derived ingredients in the rolled sheet is not particularly limited but can be 80 wt% or less, 70 wt% or less, or 50 wt% or less. Any combination of upper and lower limits of the tobacco raw material-derived ingredients in the rolled sheet can be used.
The content of the ingredients derived from the tobacco raw material in the rolled sheet can be calculated as the proportion of the weight of said tobacco raw material relative to the total weight of the tobacco raw material that is used and any externally added ingredients.

### (OTHER INGREDIENTS)

The rolled sheet can further comprise an aerosol-generating agent.
The aerosol-generating agent is not particularly limited but can include glycerin, 1,2-propanediol, 1,3-propanediol, or a mixture of two or more of these.
The content of the aerosol-generating agent in the rolled sheet is not particularly limited, but in the interests of the volume of smoke during smoking, is preferably 10 to 50 wt%, more preferably 15 to 45 wt%, and ideally 20 to 25 wt%.

The rolled sheet can further comprise glucan. Glucan is a type of binder, as described below.
Examples of glucan are not particularly limited but can include tamarind gum, guar gum, locust bean gum, gellan gum, pullulan, or a mixture of two or more of these.
The content of the glucan in the rolled sheet is not particularly limited, but in the interests of sheet formability, is preferably 2 to 9 wt%, more preferably 3 to 7 wt%, and ideally 4 to 6 wt%.

The rolled sheet can comprise a binder. On the other hand, the use of starch that functions as a binder in the present invention allows a rolled sheet that does not contain any binders other than starch to be produced. If the rolled sheet contains a binder in the form of an impurity, the content of the binder other than starch in the rolled sheet can be 3 wt% or less, 1 wt% or less, or 0.5 wt% or less.

In cases where none is preferably added, the rolled sheet can be pulp-free. If the rolled sheet contains pulp in the form of an impurity, the content of the pulp in the rolled sheet can be 3 wt% or less, 1 wt% or less, or 0.5 wt% or less.

The rolled sheet can further comprise fine tobacco powder in addition to the tobacco raw material-derived ingredients described above. Fine tobacco powder means aged tobacco leaf that has been ground to a predetermined particle size. Such fine tobacco powder can be used by being added as such to the tobacco formulation or rolled sheet, without boiling or extracting the above tobacco raw material.
The content of the fine tobacco powder in the rolled sheet is not particularly limited, but increasing the content of the find tobacco powder can contribute to the tobacco flavor. However, too high of a fine tobacco powder content will result in a corresponding decrease in the content of the ingredients derived via boiling and extraction from the tobacco raw material, and thus insufficient bondability for preserving the shape of the rolled sheet. From this point of view, the content of the fine tobacco powder in the rolled sheet is preferably 10 to 80 wt%, more preferably 30 to 70 wt%, and ideally 50 to 70 wt%.

Details on rolled sheets are disclosed in "Dictionary of Tobacco, Tobacco Academic Studies Center, 2009.3.31."

The rolled sheet of the present invention is not particularly limited, but can be made in the form of the moulded tobacco formulation described in the "1. Tobacco Formulation" section described above.

### 3. PRODUCTION METHOD

### (METHOD FOR PRODUCING TOBACCO FORMULATION)

The tobacco formulation of the present embodiment is preferably produced by a method comprising the step of heating the tobacco raw material in a medium to extract the starch noted above. The tobacco formulation can be in the form of that described in "1.Tobacco Formulation" above.

### (1) TEMPERATURE

The starch in the tobacco formulation is contained in the cell walls of the tobacco raw material. The temperature must therefore be high enough to allow the starch to be released from the cells. From this perspective, the temperature during extraction is preferably 100 to 125°C, more preferably 105 to 120°C, and ideally 110 to 119°C. The cellulose can be efficiently released from the cells at this temperature.

### (2) PRESSURE

The pressure must be high enough to allow the starch to be released from the cells. From this perspective, the average pressure during extraction is preferably 20 to 117 kPa, more preferably 50 to 110 kPa, and ideally 85 to 95 kPa. The maximum pressure during extraction is preferably 70 to 117 kPa, more preferably 80 to 116.5 kPa, and ideally 90 to 116.5 kPa. Ensuring that the average pressure or maximum pressure is within said numerical range will allow the cellulose to be efficiently released from the cells.

### (3) TIME

The time must be long enough to allow the starch to be released from the cells. From this perspective, the extraction process is preferably 20 to 90 minutes long, more preferably 60 to 80 minutes long, and ideally 65 to 70 minutes long. Ensuring that the duration of the extraction process is within the above numerical range will allow the cellulose to be efficiently released from the cells.

### (4) NUMBER OF TIMES

Repeating the extraction process will allow more starch to be released from the cells. From this point of view, the extraction process can be carried out 1 to 2 times, 3 to 4 times, or 5 to 10 times; the higher the number of times, the more efficiently the starch can be released. Ensuring that the extraction process is carried out a number of times within the above numerical range will allow the cellulose to be efficiently released from the cells.

### (5) ATMOSPHERE

The starch is preferably extracted from the tobacco raw material in a closed system. This is to prevent the tobacco raw material from losing flavour.

### (6) GRINDING

In the interests of extraction efficiency, the tobacco raw material undergoing extraction preferably has a large surface area. A process for grinding the tobacco raw material should therefore be provided in advance to allow the powdered tobacco raw material to be extracted. In cases such as this, dry grinding is preferred. Known machines can be used for dry grinding. The particle size distribution of the powdered tobacco raw material is not limited but should preferably have a D90 of less than 500 µm and more preferably a D90 less than 100 µm. The lower limit of the D90 is not limited, but is substantially to 5 µm or more.

Alternatively, the tobacco raw material may be ground at the same time as when extracted. Specifically, the tobacco raw material can be extracted while wet ground. Wet grinding is preferably carried out in a closed system. The particle size distribution of the wet ground tobacco raw material is as described above.

The method for producing the tobacco formulation can further comprise the step of adding an aerosol-generating agent, binder, fine tobacco powder, or a combination of two or more of these. An aerosol-generating agent or binder as described in "(Other Ingredients)" in "2. Rolled Sheet" above can be used.

The method for producing the tobacco formulation can be one that does not comprise a step for adding pulp. In the present application, the rolled sheet can be formed without externally attaching pulp to the tobacco formulation.

### (METHOD FOR PRODUCING ROLLED SHEET)

A calendaring method can be adopted as the method for producing the rolled sheet of the present invention.

The method for producing the rolled sheet of the present invention can comprise: a step for preparing the tobacco formulation in the method described above; and a step for rolling and then drying the tobacco formulation.
The method for producing the rolled sheet need not comprise the step of grinding the tobacco formulation if the tobacco raw material is ground in the step for preparing the tobacco formulation.

### <METHOD FOR FORMING ROLLED SHEET (CALENDERING METHOD)>

Examples of methods for forming a rolled sheet via a calendering method include methods comprising the following steps:
(1) a step for mixing ground aged tobacco, such as the fine tobacco powder described above, with water, optionally pulp, and optionally a binder to obtain a mixture (homogenisation step);
(2) a step for introducing and rolling the mixture between calendering rolls; and
(3) a step in which the roll moulded product is separated from the calendering rollers using a doctor knife and is transported on a net conveyor and dried in a dryer.
When a rolled sheet is formed in this manner, the surface of the calendering rollers may be heated or cooled, and the rotating speed of the calendering rollers may be adjusted, depending on the intended purpose. Adjusting the intervals between calendering rollers will also allow a rolled sheet having the desired basis weight to be obtained.

The shape of the rolled sheet can be adjusted, as appropriate, but in one mode the thickness is 50 to 500 µm. The rolled sheet can be cut to produce cuts or strands. The rolled sheet can also be ground to produce powder.

### 4. TOBACCO FILLER AND SMOKING PRODUCT

The tobacco filler of the present invention comprises the rolled sheet described above.
The smoking product of the present invention also comprises the tobacco filler.
The smoking product of the present invention can be a heat-not-burn smoking product.

As used in the present application, "smoking product" means an aspiration product upon which a user draws to experience flavour. Smoking products can be broadly divided into burning smoking products, such as conventional cigarettes, and heat-not-burn smoking products.

Examples of burning smoking products include cigarettes, pipes, kiserus (Japanese smoking pipes), cigars, and cigarillos.

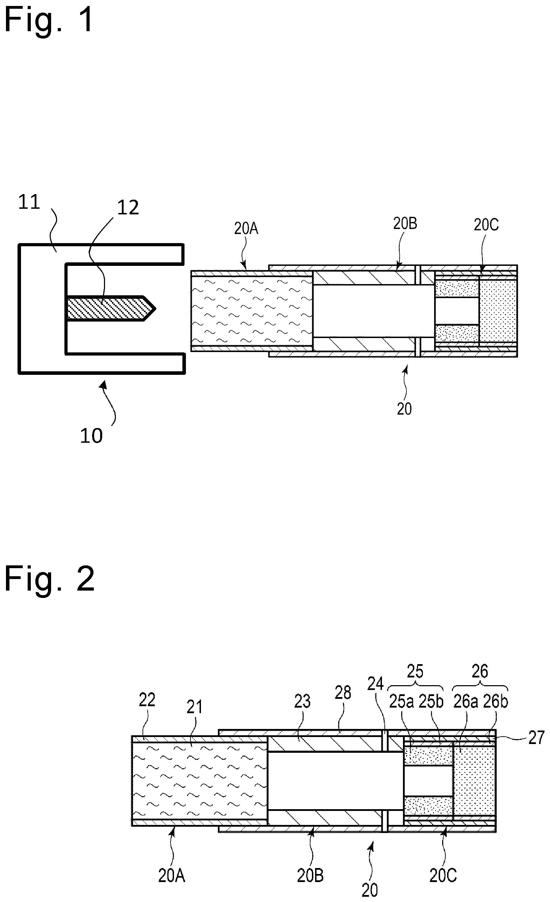

Heat-not-burn smoking products (heated smoking products) may be heated by a heating device that is separate from the product, or by a heating device that is integrated with the product. In the former type of smoking product (separate heating device), the heat-not-burn smoking product and the heating device are collectively referred to as a "heat-not-burn smoking system." An example of a heat-not-burn smoking system is described below with reference to Figures 1 and 2.

Figure 1 is a cross-sectional schematic view showing an example of a heat-not-burn smoking system before the heater 12 is inserted into the smoking segment 20A of the heat-not-burn smoking product 20. During use, the heater 12 is inserted in the smoking segment 20A. Figure 2 is a cross-sectional view of a heat-not-burn smoking product 20.

As shown in Figure 1, the heat-not-burn smoking system comprises a heat-not-burn smoking product 20 and a heating device 10 which heats the smoking segment 20A from the inside. However, the heat-not-burn smoking system is not limited to the configuration shown in Figure 1.

The heating device 10 shown in Figure 1 comprises a body 11 and a heater 12. The body 11 may comprise a battery unit and a control unit (not shown). The heater 12, which can be a heater based on electrical resistance, is inserted into the smoking segment 20A to heat the smoking segment 20A.

In Figure 1, the smoking segment 20A is heated from the inside, but embodiments of the heat-non-burn smoking product 20 are not limited to this; in other embodiments, the smoking segment 20A is heated from the outside.

The heating temperature of the heating device 10 is not particularly limited, but is preferably 400°C or below, more preferably 50 to 400°C, and even more preferably 150 to 350°C. The heating temperature refers to the temperature of the heater 12 of the heating device 10.

As shown in Figure 2, the heat-not-burn smoking product 20 (referred to below simply as "the smoking product 20") has a cylindrical shape. In circumference, the length of the smoking product 20 is preferably 16 mm to 27 mm, more preferably 20 mm to 26 mm, and even more preferably 21 mm ato 25 mm. The total length (horizontal length) of the smoking product 20 is not particularly limited, but is preferably 40 mm to 90 mm, more preferably 50 mm to 75 mm, and even more preferably 50 mm to 60 mm.

The smoking product 20 consists of a smoking segment 20A and a filter portion 20C constituting the mouthpiece, which are connected by a connecting portion 20B.

The smoking segment 20A is cylindrical, the total length (axial length) of which is, for example, preferably 5 to 100 mm, more preferably 10 to 50 mm, and even more preferably 10 to 25 mm. The shape of the cross-section of the smoking segment 20A is not particularly limited, but can be circular, elliptical, or polygonal, for example.

The smoking segment 20A has a smoking composition sheet or material 21 derived therefrom, around which is wrapped a wrapper 22.

The filter portion 20C is cylindrical. The filter portion 20C has a rod-shaped first segment 25 that is made by being filled with cellulose acetate fibers, and a rod-shaped second segment 26 that is similarly made by being filled with cellulose acetate fibers. The first segment 25 is located on the smoking segment 20A side. The first segment 25 may have a hollow portion. The second segment 26 is located on the mouthpiece side. The second segment 26 is solid. The first segment 25 is composed of a first filling layer (cellulose acetate fibers) 25a and an inner plug wrapper 25b that is wrapped around the first filling layer 25a. The second segment 26 consists of a second filling layer (cellulose acetate fibers) 26a and an inner plug wrapper 26b that is wrapped around the second filling layer 26a. The first and second segments 25 and 26 are connected by an outer plug wrapper 27. The outer plug wrapper 27 is adhered to the first segment 25 and second segment 26 by a vinyl acetate emulsion-based adhesive, for example.

The length of the filter portion 20C can be 10 to 30 mm, for example, the length of the connecting portion 20B can be 10 to 30 mm, for example, the length of the first segment 25 can be 5 to 15 mm, for example, and the length of the second segment 26 can be 5 to 15 mm, for example. The lengths of these individual segments are examples, and can be modified, as appropriate, depending on, for example, the manufacturability, the required quality, and the length of the smoking segment 20A.

For example, the first segment 25 (centre hole segment) is composed of the first filling layer 25a having one or more hollow portions, and the inner plug wrapper 25b that covers the first filling layer 25a. The first segment 25 has the function of increasing the strength of the second segment 26. The first filling layer 25a of the first segment 25 is, for example, densely filled with cellulose acetate fibers. To the cellulose acetate fibers are added and cured a triacetin-containing plasticizer, in an amount of 6 to 20% by mass, for example, relative to the mass of the cellulose acetate. The hollow portion of the first segment 25 may, for example, have an inner diameter of φ 10 to φ 5 0 mm.

The first filling layer 25a of the first segment 25 may, for example, be configured with a relatively high fiber filling density, or may be the same as the fiber filling density of the second filling layer 26a of the second segment 26 described below. Thus, when drawn, air or aerosol will flow only through the hollow portion, and virtually no air or aerosol will flow through the first filling layer 25a. In cases where, for example, less of a filtration-induced reduction in the aerosol component is desired in the second segment 26, the length of the second segment 26 can be shortened, for example, to allow the first segment 25 to be lengthened accordingly.

Replacing the shortened second segment 26 with the first segment 25 will effectively increase aerosol delivery. The first filling layer 25a of the first segment 25 is a fiber filled layer, and the user therefore will not feel any discomfort when touching the outside during use.

The second segment 26 is composed of the second filling layer 26a and an inner plug wrapper 26b that covers the second filling layer 26a. The second segment 26 (filter segment) is filled with cellulose acetate fibers in a commonly used density, and has a commonly used aerosol filtration capacity.

The filtration capacity for filtering the aerosol (mainstream smoke) released from the smoking segment 20A may differ between the first segment 25 and the second segment 26. At least one of the first segment 25 or the second segment 26 may comprise flavouring. The filter portion 20C may have any structure, and may be a structure having a plurality of segments as described above, or may be composed of a single segment. The filter portion 20C may be composed of one segment. In such cases, the filter portion 20C may be composed of either the first segment or the second segment.

The connecting portion 20B is cylindrical. The connecting portion 20B has a paper tube 23 that is cylindrically formed using cardboard, for example. The connecting portion 20B may be filled with a cooling member for cooling the aerosol. Examples of cooling members includes a sheet of a polymer such as polylactic acid, which can be folded and filled. A support that prevents the position of the smoking segment 20A from moving around may furthermore be provided between the smoking segment 20A and the connecting portion 20B. The support can be composed of known materials such as a centre hole filter of the kind in the first segment 25.

A wrapper 28 is cylindrically wrapped around the outside of the smoking segment 20A, connecting portion 20B, and filter portion 20C to integrally join these parts. One surface (the inner surface) of the wrapper 28 is coated with a vinyl acetate-emulsion-based adhesive, over the entire surface or substantially the entire surface, except near the ventilation holes 24. A plurality of ventilation holes 24 are externally formed by a laser process after the smoking segment 20A, connecting portion 20B, and filter portion 20C have been integrated by the wrapper 28.

The ventilation holes 24 comprise two or more through-holes that pass through the connecting portion 20B in the thicknesswise direction. The two or more through-holes are formed so as to be radially arranged, as viewed along a line extending through the central axis of the smoking product 20. In the present embodiment, the ventilation holes 24 are provided in the connecting portion 20B, but may be provided in the filter portion 20C. In this embodiment, the two or more through-holes of the ventilation holes 24 are provided in a single row at a constant interval in a circular pattern, but may be provided in two rows at a constant interval in a circular pattern, where the one or two rows of the ventilation holes 24 may be provided discontinuously or irregularly. When a user holds the mouthpiece in the mouth and draws, outside air is taken into the mainstream smoke through the ventilation holes 24. However, no ventilation holes 24 need be provided.

### EXAMPLES

### [EXAMPLE 1]

### (PREPARATION OF TOBACCO FORMULATION AND ROLLED SHEET)

1000 g of flue cured tobacco was processed in a small grinder (High-Speed Mill, by Labonect, Co. Ltd.) to obtain coarse flue cured tobacco (referred to below as "tobacco sample"). 300 g of the resulting tobacco sample and 1000 g of water were introduced into and mixed in a switchable pressure cooker (Quick Eco, by Pearl Metal Co., Ltd.), and the resulting liquid mixture was boiled under the following conditions.
Pressure: Maximum pressure 90 kPa; average pressure 80 kPa
Temperature: 119°C
Time: 30 minutes

The boiled liquid mixture in the pressure cooker was further heat treated for 0.45 hour at 119°C, giving a liquid mixture. Analysis of the resulting liquid mixture based on IR moisture analysis using an IR moisture analyzer (MB45, by OHAUS) revealed that the water content of the liquid mixture was 77.1 wt%.

A 70 g sample of the liquid mixture in the pressure cooker (weight of water: 54 g; solids weight: 16 g) was taken; 160 g of fine tobacco powder (composition: 93 wt% flue cured variety; 7 wt% orient variety) and 19 g glycerin were added; and the contents were stirred for 2 minutes in a mixer (Kenmix KM250, by AICOHSHA MFG. CO., LTD.), giving a treated mixture. The resulting mixture was kneaded using an extruder (Single-Dome Gran DG-L1, by Dalton Corp.). The kneading step was repeated a total of four times to obtain a kneaded product (tobacco formulation).

The kneaded product (tobacco formulation) obtained as described above was applied to calendaring rolls (by Yuri Roll Co., Ltd.) and formed into a sheet, which was then dried for 5 minutes at 80°C in a hot air dryer to produce a rolled sheet (thickness: 0.25 mm).
In the rolled sheet of Example 1, the content of the ingredients derived from the tobacco sample (tobacco raw material) and the content of the fine tobacco powder that had been added could be calculated as 8 wt% and 82 wt%, respectively. The total content of the ingredients derived from the tobacco sample and the fine tobacco powder in the rolled sheet of Example 1 could thus be calculated as 90 wt%.

### [COMPARATIVE EXAMPLE]

### (PREPARATION OF TOBACCO FORMULATION AND ROLLED SHEET)

70 g of the tobacco sample (ground product) described in [Example 1] above was taken; 160 g of fine tobacco powder (composition: 93 wt% flue cured variety; 7 wt% orient variety), 8 g of pulp, 110 g of CMC (carboxymethyl cellulose), 110 g of water, and 19 g of glycerin were added; and the contents were stirred for 2 minutes in a mixer (Kenmix KM250, by AICOHSHA MFG. CO., LTD.), giving a treated mixture.
The resulting mixture was kneaded using an extruder (Single-Dome Gran DG-L1, by Dalton Corp.). The kneading step was repeated a total of four times to obtain a kneaded product (tobacco formulation).

The kneaded product (tobacco formulation) obtained as described above was applied to calendaring rolls (by Yuri Roll Co., Ltd.) and formed into a sheet, which was then dried for 5 minutes at 80°C in a hot air dryer to produce a rolled sheet (thickness: 0.25 mm).
In the rolled sheet of the Comparative Example, the content of the ingredients derived from the tobacco sample (tobacco raw material) and the content of the fine tobacco powder that had been added could be calculated as 26 wt% and 60 wt%, respectively. The total content of the ingredients derived from the tobacco sample and the fine tobacco powder in the rolled sheet of the Comparative Example could thus be calculated as 86 wt%.

### (1) DETERMINATION OF PARTICLE SIZE OF POORLY WATER-SOLUBLE SUBSTANCE

2.5 g (1 g, based on the weight of the solids) of the kneaded product obtained in Example 1 above (preparation of tobacco formulation and rolled sheet) was weighed out as as a kneaded product sample. Portions of the rolled sheets obtained in Example 1 and the Comparative Example above (preparation of tobacco formulation and rolled sheet) were cut to obtain 1 g of rolled sheet samples.
40 mL of water was added per 2.5 g (1 g, based on the weight of the solids) of the kneaded product sample of Example 1 and per 1 g each of the rolled sheet samples of Example 1 and the Comparative Example, and the samples were then heated for 30 minutes at 80°C to obtain liquid mixtures. The resulting liquid mixtures were centrifuged for 5 minutes at 5530 G using a centrifuge (refrigerated centrifuge, by Kubota Corporation), and the supernatant was removed, giving 0.5 g portions of precipitate.
40 mL of water was added to the resulting 0.5 g portions of precipitate, and they were heated for 30 minutes at 80°C to obtain liquid mixtures. The resulting liquid mixtures were centrifuged for 5 minutes at 5530 G using a centrifuge (refrigerated centrifuge, by Kubota Corporation), and the supernatant was removed, giving 0.4 g portions of precipitate. The resulting 0.4 g portions of precipitate were treated two more times by the same processes as above (addition of water, heating, mixing, centrifugation, and removal of supernatant) to obtain 0.3 portions of precipitate.
40 mL of a 95% ethanol aqueous solution was added to the resulting 0.3 g portions of precipitate, and the ingredients were then mixed to obtain dispersions of each precipitate. The resulting dispersions were analyzed using a wet particle size analyzer (HORIBA Partica 960, HORIBA, Ltd.), and the resulting particle size (D90) values were used as the measured particle size (primary particle size) of the poorly water-soluble substance. The results are shown in Table 1.

### (2) DETERMINATION OF WATER CONTENT

The water content of the tobacco formulation was determined based on IR moisture analysis of the kneaded product (tobacco formulation) obtained in Example 1 above (preparation of tobacco formulation and rolled sheet) using an IR moisture analyzer (MB45, by OHAUS). The results are shown in Table 1.

### (3) DETERMINATION OF CONTENT OF POORLY WATER-SOLUBLE SUBSTANCE

2.5 g (1 g, based on the weight of the solids) of the kneaded product obtained in Example 1 above (preparation of tobacco formulation and rolled sheet) was weighed out as as a kneaded product sample. 40 mL of 80°C hot water was added per 2.5 g (1 g, based on the weight of the solids) of the kneaded product sample of Example 1, and the ingredients were then heated for 30 minutes to obtain a liquid mixture. The resulting liquid mixture was centrifuged for 5 minutes at 5530 G using a centrifuge (refrigerated centrifuge, by Kubota Corporation). After centrifugation, the supernatant was removed, giving 0.5 g of precipitate. The resulting 0.5 g of precipitate was treated three more times by the same processes as above (addition of hot water, heating, centrifugation, and removal of supernatant), the precipitate was recovered, the resulting precipitate was dried for 30 minutes at 80°C, and the resulting dried material was weighed. The proportion (wt%) of the weight of the resulting dry material relative to the weight of the solids (1 g) of the kneaded product used above was calculated, and the resulting value was used as the content (wt%) (calculated on the basis of the solids) of the poorly water-soluble substance in the kneaded product The results are shown in Table 1.
The rolled sheet is formed by removing only the water used as the medium from the kneaded product, and the content (wt%) (calculated on the basis of the solids) of the poorly water-soluble substance in the kneaded product obtained as described above can therefore be considered to be equal to the content (wt%) of the poorly water-soluble substance in the rolled sheet.

### (4) DETERMINATION OF STARCH CONTENT

2.5 g (1 g, based on the weight of the solids) of the kneaded product of the Example 1 above was weighed out as a kneaded product sample of Example 1. 1 g of the rolled sheet of the Comparative Example was weighed out, and 2 g of water was then added to obtain 3 g (1 g, based on the weight of the solids) of a liquid mixture sample of the Comparative Example.
The kneaded product sample of Example 1 and the liquid mixture sample of the Comparative Example (1 g each, based on the weight of the solids) were ground into powder materials via homogenisation using a homogeniser (ROBOMICS, by Tokushu KIKA KYOGO CO., LTD.). 100 mg of the resulting powder materials were weighed out and introduced into 15 mL-centrifuge tubes (SUMILON^{®}, by Sumitomo Bakelite Co., Ltd.), 10 mL of MilliQ water (ambient temperature) was added, and the contents were then ultrasonically extracted for 10 minutes using an ultrasonic device (BRANSONIC, Emerson Japan Co., Ltd.) to obtain liquid mixtures. The resulting liquid mixtures were centrifuged for 5 minutes at 4°C and 8,000 rpm using a centrifuge (refrigerated centrifuge, by Kubota Corporation). After centrifugation, the supernatant was removed to obtain precipitate. 7 mL of dimethylsulfoxide (DMSO) was added to the resulting precipitate, and the contents were stirred with a vortex mixer to obtain suspensions. The resulting suspensions were heated (extracted) for 5 minutes at 100°C to dissolve the starch contained in the precipitate in DMSO. The extracted suspensions were quenched with ice water, and were centrifuged for 5 minutes at 3,000 G using the centrifuge described above. After centrifugation, 5 mL of supernatant was collected and introduced into 50-mL measuring flasks. The supernatant in the measuring flasks was treated three more times by the same processes as above (extraction for 5 minutes at 100°C, quenching with ice water, centrifugation for 5 minutes at 3,000 G, and collection of 5 mL of supernatant and introduction into 50-mL measuring flasks) to obtain 20 mL of DMSO in which starch had been dissolved (while in the measuring flasks).
MilliQ water was added to the 20 mL of DMSO to bring the volume to 100 mL, the contents were stirred, and the 100 mL samples were transferred to glass test tubes. 500 µL of 5% phenol solution was introduced into the samples in the test tubes, and 2.5 mL of concentrated sulphuric acid was gradually introduced to break down the the starch in the samples into monosaccharides. The resulting solutions were then stirred in a vortex mixer, and were then allowed to stand for 20 minutes. The absorbance of the solutions that had been allowed to stand in the test tubes was determined at 490 nm using a spectrophotometer (SP-300, by OPTIMA Co., Ltd.). The absorbance was similarly analyzed using glucose that had been dissolved in 5% phenol solution as the calibration curve. The glucose concentrations were 0 µg/mL, 10 µg/mL, 20 µg/mL, 50 µg/mL, and 100 µg/mL. Based on the absorbance that had been determined and the calibration curve, the percentage of the weight (wt%) of the starch relative to the weight of the solids (1 g) of the kneaded product or rolled sheet that had been used was calculated as the starch content (wt%).
The results are shown in Table 1.
The rolled sheet is formed by removing only the water used as the medium from the kneaded product, and the content (wt%) (calculated on the basis of the solids) of the starch in the kneaded product obtained as described above can therefore be considered to be equal to the content (wt%) of the starch in the rolled sheet.

### [TABLE 1]

**Table 1**

| | Poorly water-soluble substance particle size (µm) | | Water content (wt%) | Content of poorly water-soluble substance (wt%) (calculated on basis of solids) | Starch content (wt%) (calculated on basis of solids) |
|---|---|---|---|---|---|
| | Kneaded product | Rolled sheet | Kneaded product | Kneaded product | Example 1: Kneaded product Comparative Example: Rolled sheet |
| Example 1 | 22.4 | 24.2 | 60 | 12 | 3.04 |
| Comparative Example | - | 400 | - | - | 2.47 |

| | | | | | |
|---|---|---|---|---|---|
| * Dashes in the table mean "not determined." | | | | | |

The results of [Example 1] above show that the tobacco formulation of Example 1 can be used to produce a rolled sheet without the external attachment of pulp. When the tobacco formulation of Example 1 is obtained, the starch contained in the tobacco raw material is extracted via a boiling process, and a poorly water-soluble substance is obtained in the form of tobacco raw material residue. As an alternative to pulp, the resulting poorly water-soluble substance derived from the tobacco raw material enhances the formability and strength of the rolled sheet, thus allowing a rolled sheet to be formed without the external attachment of pulp. Also, as shown in Table 1, the particle size (µm) of the poorly water-soluble substance was determined to be very small, at 22.4µm in the kneaded product and 24.2 µm in the rolled sheet of Example 1. This is because tobacco samples in which the particle size has been reduced as a result of being ground and extracted are contained in the form of a poorly water-soluble substance in the kneaded product or rolled sheet of Example 1. It appears that the reduced particle size of the poorly water-soluble substance in Example 1 results in an increase in the surface area of the tobacco particles adhering to each other, allowing the strength of the rolled sheet to be enhanced.

With the tobacco formulation of the Comparative Example, on the other hand, pulp was added as the poorly water-soluble substance to produce the rolled sheet. Even if no pulp were externally attached to the tobacco formulation of the Comparative Example, a rolled sheet could not be produced because the sheet configuration cannot be preserved. As noted above, the total content (86 wt%)) of the fine tobacco powder and tobacco sample-derived ingredients in the rolled sheet of the Comparative Example is less than the total content (90 wt%) in the rolled sheet of Example 1. In the rolled sheet of the Comparative Example, the use of the pulp prevented the tobacco content from being increased, resulting in inferior tobacco flavour.
It may thus be seen that the kneaded product or rolled sheet of Example 1 has the following advantages over the Comparative Example: there is no need to externally attach any pulp; the tobacco content can be increased; and there is no need for a grinding process when producing the rolled sheet.

The results of Table 1 also confirmed that the starch content (calculated on the basis of the solids) in the kneaded product of Example 1 was 3.04 wt%, which was higher than the starch content of 2.47 wt% in the rolled sheet of the Comparative Example (corresponding, as noted above, to the starch content (calculated on the basis of the solids) in the kneaded product). This might be attributed to the fact that, in the kneaded product of Example 1, the boiling treatment resulted in the release of more starch in the kneaded product extracted from the tobacco raw material, as compared with the liquid mixture of the Comparative Example in which no boiling treatment was used. When a greater amount of starch is contained in the kneaded product, as is the case in Example 1, the starch functions as a binder to join the poorly water-soluble substance together, thus allowing a stronger rolled sheet to be produced.

### (5) Assessment of Palatability

Wrappers were filled with the rolled sheets obtained in Example 1 and the Comparative Example above (preparation of tobacco formulation and rolled sheet) to produce smoking segments. The resulting smoking segments were used to produce burning type tobacco smoking products in the usual manner.
The burning type tobacco smoking products thus prepared were assessed for palatability by ten well-trained panelists. The palatability of the smoking products was assessed by calculating the average rating of 5 panelists whose assessments were based on the 5 ranked criteria in Table 2 below. In the criteria of Table 2 below, 3 means the rating was the same as the Comparative Example. Average values to the second decimal place were rounded off to the first decimal place to calculate the scores. The results of assessment are shown in Table 3.

### [TABLE 2]

**Table 2**

| | **Significantly lower** | **Lower** | **No difference** | **Greater** | **Significantly greater** |
|---|---|---|---|---|---|
| **Palatability** | **1** | **2** | **3** | **4** | **5** |

### [Table 3]

**Table 3**

| | **Example 1** | **Comparative Example** |
|---|---|---|
| **Palatability** | **4.2** | **3.0** |

The results of Table 3 show that the palatability of the rolled sheet of Example 1 was better than that of the rolled sheet of the Comparative Example. An apparent result is that, unlike the rolled sheet of the Comparative Example, the rolled sheet of Example 1 thus does not require the external attachment of pulp, which allows the tobacco content to be increased and thus results in better palatability.

A tobacco raw material can thus be used in the present invention to produce a rolled sheet without the external attachment of a poorly water-soluble substance raw material other than tobacco.

### REFERENCE SIGNS LIST

10 Heating device
11 Body
12 Heater
20 Heat-not-burn smoking product
20A Smoking segment
20B Connecting portion
20C Filter portion
21 Smoking composition sheet or material derived therefrom
22 Wrapper
23 Paper tube
24 Ventilation holes
25 First segment
25a First filling layer
25b Inner plug wrapper
26 Second segment
26a Second filling layer
26b Inner plug wrapper
27 Outer plug wrapper
28 Wrapper

## Claims

1. A rolled sheet, comprising:
(1) a poorly water-soluble substance derived from a tobacco raw material; and
(2) starch extracted from said tobacco raw material or from another tobacco raw material.

2. The rolled sheet according to claim 1, wherein the starch is starch extracted from said tobacco raw material.

3. The rolled sheet according to claim 1 or claim 2, wherein the starch is soluble starch.

4. The rolled sheet according to any of claims 1 to 3, wherein the primary particle size of the poorly water-soluble substance is 50 µm or less.

5. The rolled sheet according to any of claims 1 to 4, wherein the starch content in the rolled sheet is 10 wt% or less.

6. The rolled sheet according to any one of claims 1 to 5, wherein the tobacco raw material from which the poorly water-soluble substance is derived comprises leaf tobacco.

7. The rolled sheet according to any of claims 1 to 6, wherein the tobacco raw material from which the poorly water-soluble substance is derived comprises an alkaloid.

8. The rolled sheet according to any of claims 1 to 7, further comprising an aerosol-generating agent.

9. The rolled sheet according to claim 8, wherein the aerosol-generating agent comprises glycerin, 1,2-propanediol, 1,3-propanediol, or a mixture thereof.

10. The rolled sheet according to any of claims 1 to 9, wherein no binder other than the starch is included.

11. The rolled sheet according to any one of claims 1 to 10, wherein no pulp is included.

12. Tobacco filler comprising the rolled sheet according to any of claims 1 to 11.

13. A smoking product comprising the tobacco filler according to claim 12.

14. The smoking product according to claim 13, which is a non-combustible heated smoking product.

15. A method for producing the rolled sheet according to any of claims 1 to 11, comprising:
the step of heating a tobacco raw material in a medium to extract starch and prepare a tobacco formulation; and
the step of rolling and then drying the tobacco formulation.
